Europäisches Patentamt

**European Patent Office**

**Office européen des brevets**

(19)

(11) Veröffentlichungsnummer: **0 111 721**
**A1**

(12) **EUROPÄISCHE PATENTANMELDUNG**

(21) Anmeldenummer: **83111091.1**

(22) Anmeldetag: **05.11.83**

(51) Int. Cl.³: **A 01 C 1/02**
**A 01 G 31/02**

(30) Priorität: **13.11.82 DE 3242037**

(43) Veröffentlichungstag der Anmeldung:
**27.06.84 Patentblatt 84/26**

(84) Benannte Vertragsstaaten:
**AT BE CH DE FR GB IT LI LU NL SE**

(71) Anmelder: **Meyer, Bruno**
**Lindenstrasse 2**
**D-5238 Hachenburg(DE)**

(72) Erfinder: **Meyer, Bruno**
**Lindenstrasse 2**
**D-5238 Hachenburg(DE)**

(74) Vertreter: **Kossobutzki, Walter, Dipl.-Ing.**
**Waldstrasse 6**
**D-5419 Helferskirchen(DE)**

(54) **Vorrichtung zum Erzeugen von Keimlingen.**

(57) Eine Vorrichtung zum Erzeugen von Keimlingen aus Keimgut, insbesondere aus Samen, Getreide und Hülsenfrüchten sowie zur hydroponischen Anpflanzung von Gräsern für die menschliche Ernährung mit mindestens einem das Keimgut aufnehmenden Keimbehälter (12) und einer mit Wasser befüllbaren Schale (13), in die der Keimbehälter (12) über einen Hubantrieb (5-8) eintauchbar ist, weist einen als Sieb ausgebildeten und auswechselbar in einer Ausnehmung (11) eingehängten Keimbehälter (12) und mindestens einen seitlichen Stützrahmen (2) zum Anschluß der Tragplatte (10) und der Schale (13) auf und der Hubantrieb (5-8) ist im Stützrahmen (2) angeordnet und zwischen der Tragplatte (10) und der Schale (13) wirksam.

*Fig. 1*

Bruno Meyer, Lindenstraße 2, 5238 Hachenburg

**Vorrichtung zum Erzeugen von Keimlingen für die menschliche Ernährung**

Die Erfindung bezieht sich auf eine Vorrichtung zum Erzeugen von Keimlingen aus Keimgut, insbesondere aus Samen, Getreide und Hülsenfrüchten sowie zur hydroponischen Anpflanzung von Gräsern für die menschliche Ernährung gemäß dem Oberbegriff des Anspruches 1.

Aus der DE-PS 36 561 ist ein Keimapparat bekannt, der aus einem Wasserbehälter mit einem Einsatz zur Aufnahme von Sand besteht. Der Boden dieses Einsatzes weist nur wenige Löcher auf, durch die der Sand, der sich immer mit seiner untersten Schicht im Wasser befindet, ständig feucht gehalten wird. Die nicht im Wasser befindliche Sandoberfläche nimmt den Samen auf. Über dem Samen ist eine Glasplatte angeordnet, die noch durch einen Filzdeckel bedeckt ist. Dieser bekannte Keimapparat mag zwar für die Untersuchung der Keimfähigkeit von einzelnen Samenkörnern geeignet sein; zur Erzeugung von Keimlingen für die menschliche Ernährung ist er vollkommen unbrauchbar. Dies liegt daran, daß hier nur die direkt auf der Sandoberfläche aufliegenden Samenkörner eine ausreichende, für das Keimen erforderliche Feuchtigkeit erhalten. Eine höhere Schichtung der Samenkörner ist daher unzweckmäßig. Dadurch, daß sich einerseits der Boden des Einsatzes und damit auch die unterste Sandschicht ständig im Wasser befinden und andererseits der obere Bereich des Einsatzes immer verschlossen ist, kann hier keine, für den Keimvorgang erforderliche Frischluft an die Samenkörner gelangen. Dies beeinträchtigt den Keimvorgang und kann zum Faulen der Samenkörner führen. Die hier auf dem Sandbett erzeugten Keimlinge müßten, falls sie dennoch für die menschliche Ernährung verwendet werden sollten, vor dem Verzehr sorgfältig gewaschen werden. Dieser Waschvorgang beschädigt die Keimlinge und stellt trotzdem nicht sicher, daß keine Sandkörner mehr in den Keimlingen verbleiben.

In der DE-PS 63 327 ist ein Keimapparat offenbart, der aus einem mit einem Deckel verschließbaren Wasserbehälter besteht. An der Deckelunterseite ist eine Keimschüssel aus porösem Ton befestigt, die durch Drehung des Deckels über Schrägschlitze und Stifte in das Wasser abgesenkt und wieder angehoben werden kann. Die Wasserdurchlässigkeit der Keimschüssel ist so gering, daß sie für sich allein für einen Keimvorgang nicht ausreicht. Deshalb wird hier der zu untersuchende Samen vorher in einem besonderen, mit Wasser von 15 $^{o}$C - 20 $^{o}$C gefüllten Weich- und Anwärmglas über einen Zeitraum von 12 bis 16 Stunden vorbehandelt bzw. eingeweicht. Anschließend werden die Samenkörner vorsichtig und zwar einzeln mittels einer Pinzette in Vertiefungen der Keimschüssel gelegt, wo dann im wesentlichen durch Erwärmung und nicht durch die Wandung der Keimschüssel hindurchtretende Feuchtigkeit der Keimvorgang beginnt. Sollte der Samen während der Vorbehandlung keine ausreichende Wassermenge aufgenommen haben, ist keine oder nur eine unzureichende Keimung möglich. Dieser Keimapparat ist für die Erzeugung von Keimlingen für die menschliche Ernährung ungeeignet.

In der BE-PS 566 856 ist ein Keimapparat beschrieben und dargestellt, der aus einem ortsfesten, beheizbaren Wasserbehälter besteht, über dem eine mit seitlichen Öffnungen versehene Glocke angeordnet ist. Die Glocke trägt eine von Hand drehbare Welle mit mehreren Seilrollen mit Seilen, an denen korbartig ausgebildete Keimbehälter angehängt sind. In der oberen Stellung der Keimbehälter, in der dieselben auf einer den Wasserbehälter abdeckenden Klappe abgestellt sind, kann über die Öffnungen in der Glocke das Keimgut in die Keimbehälter eingefüllt und wieder entnommen werden, was infolge der beschränkten Zugänglichkeit umständlich und zeitraubend ist. Ein Herausnehmen und damit Reinigen der Keimbehälter ist durch die Seilbefestigung nicht möglich. Durch Drehen der Welle werden die mit dem Keimgut gefüllten Keimbehälter in das Wasser getaucht, wo das Keimgut in Abhängigkeit von der Wassertemperatur einige Stunden verweilt und die für den Keimvorgang erforderliche Wassermenge aufnimmt. Anschließend werden die Keimbehälter aus dem Wasser herausgezogen, das im Keimbehälter befindliche Wasser wird durch einen besonderen Arbeitsgang entfernt und die Keimbehälter werden so lange unter der geschlossenen Klappe, also in einem Raum mit erhöhter Temperatur und Feuchtigkeit gehalten, bis der Keimvorgang eingesetzt hat. Dieser Keimapparat ist in seiner Herstellung aufwendig und für die Erzeugung von Keimlingen für die menschliche Ernährung ungeeignet. Hier besteht die Gefahr, daß das Keimgut, da es das für den Keimvorgang erforderliche Wasser bei einem Eintauchvorgang aufnehmen muß, bei nicht rechtzeitiger Entfernung des Wassers erstickt. Außerdem fehlt hier eine ausreichende Luftzirkulation, was den Keimvorgang beeinträchtigt.

Zur Erzeugung von Keimlingen an Hülsenfrüchten, vorzugsweise Sojabohnen, sowohl zur menschlichen Ernährung als auch als Viehfutter ist aus der DE-OS 30 38 443 eine Vorrichtung bekannt, die aus mindestens einer mittels Türen verschließbaren Klimakammer besteht. Diese Klimakammer nimmt mindestens einen mit Hülsenfrüchten gefüllten Keimkasten auf, dem jeweils eine Berieselungseinrichtung zugeordnet ist. Durch Aufrechterhaltung einer vorbestimmbaren Temperatur und die von der Wasserzufuhr der Berieselungseinrichtung beeinflußbare Luftfeuchtigkeit werden innerhalb verhältnismäßig kurzer Zeit an den Hülsenfrüchten Keimlinge erzeugt, die nach einem Waschvorgang verkaufsfertig sind. Diese bekannte Vorrichtung erfordert einen hohen Fertigungsaufwand und einen nicht unbeachtlichen Raumbedarf, so daß sie für den Einsatz und die Verwendung in einem Haushalt, beispielsweise zur Versorgung einer Person oder einer Familie mit Keimlingen ungeeignet ist. Darüber hinaus hat diese bekannte Vorrichtung den Nachteil, daß in dem geschlossenen Keimkasten keine ausreichende Luftzirkulation gewährleistet ist, wodurch der Keimvorgang beeinträchtigt wird. Ferner besteht hier die Gefahr, daß sich am Boden des Keimkastens Wasser absetzt und somit ein Teil der Hülsenfrüchte im Wasser liegt. Diese Hülsenfrüchte können, wenn sie länger im Wasser liegen, unbrauchbar werden. Auch ist nicht auszuschließen, daß in einem solchen Keimkasten das Keimgut zusammenwächst und verfilzt, was die Luftzirkulation und die Befeuchtung weiter beeinträchtigt.

Der Erfindung liegt die Aufgabe zugrunde, eine Vorrichtung zum Erzeugen von Keimlingen aus Keimgut, insbesondere aus Samen, Getreide und Hülsenfrüchten sowie zur hydroponischen Anpflanzung von Gräsern für die menschliche Ernährung zu schaffen, die ohne großen Aufwand hergestellt und ohne Schwierigkeiten im Haushalt eingesetzt werden kann und die darüber hinaus eine gute Luftzirkulation sowie eine gleichmäßige Feuchtigkeit des Keimgutes und damit einen optimalen Wirkungsgrad sicherstellt. Zusätzlich soll sichergestellt sein, daß die Befeuchtung in gleichen Intervallen und unabhängig von einer Bedienungsperson erfolgen kann.

Zur Lösung dieser Aufgabe werden bei einer Vorrichtung mit mindestens einem das Keimgut aufnehmenden Keimbehälter, einer Wasserschale und einem Hubantrieb die im Kennzeichen des Anspruches 1 aufgeführten Merkmale vorgeschlagen. Dabei stellen die als Sieb ausgebildeten Keimbehälter eine optimale Luftzirkulation sicher und verhindern, daß nach dem Eintauchen des Keimbehälters in die mit Wasser gefüllte Schale Wasser auf dem Boden des Keimbehälters zurückbleibt. Über die Sieblöcher kann indirektes Licht zur Verbesserung des Keimvorganges an das Keimgut gelangen. Die Aufnahme der Keimbehälter durch eine besondere, mit dem Hubantrieb zusammenwirkende Tragplatte gestattet ein Herausnehmen der Keimbehälter, was nicht nur den Füll- und Entleervorgang erleichtert, sondern auch eine gute Reinigung der Keimbehälter ermöglicht. Die Zugänglichkeit der Keimbehälter und die Kontrolle des Keimgutes wird durch die nur seitlichen Stützrahmen erleichtert, was sich im Haushalt vorteilhaft auswirkt.

Weitere Merkmale einer Vorrichtung nach der Erfindung sind in den Ansprüchen 2 - 12 offenbart.

Die Erfindung wird nachfolgend anhand in einer Zeichnung dargestellter, vereinfachter Ausführungsbeispiele näher erläutert. Dabei zeigen

Fig. 1 eine Aufrißdarstellung einer Vorrichtung gemäß der Erfindung und

Fig. 2 eine weitere Ausbildung einer Vorrichtung.

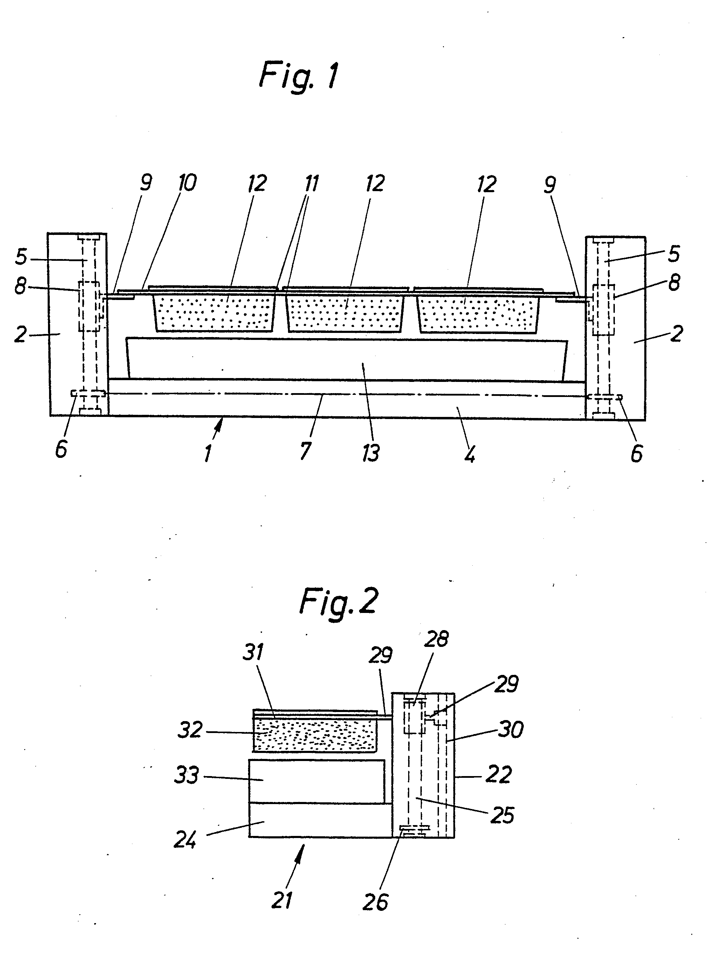

In der Fig. 1 der Zeichnung ist eine Vorrichtung 1 zum Erzeugen von Keimlingen aus Keimgut für die menschliche Ernährung gezeigt, die aus zwei mit Abstand voneinander angeordneten Stützrahmen 2, 3 besteht, die durch eine Bodenplatte 4 mit U-förmigem, nach unten offenem Querschnitt oder durch ein entsprechendes Kastenprofil fest
miteinander verbunden sind.

In jedem Stützrahmen 3 ist eine senkrechte Spindel 5 drehbar gelagert. Jede Spindel 5 trägt an ihrem unteren Ende
ein fest mit ihr verbundenes Kettenrad 6, wobei die beiden Kettenräder 6 von einer nur angedeuteten Kette 7 umschlungen und damit in gleichsinniger Antriebsverbindung
gehalten sind. Zu diesem Zweck greift in die Kette 7 ein
in der Zeichnung nicht dargestelltes Antriebskettenrad
ein, das auf der Welle eines ebenfalls nicht dargestellten Elektro-Antriebsmotors bzw. eines Getriebemotors
befestigt ist. Der Elektro-Antriebsmotor ist entweder in
einem Stützrahmen 2 oder 3 oder unterhalb der Bodenplatte
4 angeordnet.

Auf jeder Spindel 5 befindet sich eine Hubmutter 8, die
in an sich bekannter Weise über eine Führung oder dgl.
gegen eine Drehbewegung gesichert ist. An jede Hubmutter 8
ist in diesem Ausführungsbeispiel ein Tragarm 9 fest angeschlossen, der aus dem Stützrahmen 2 bzw. 3 herausragt
und in Verbindung mit einer Führung am Stützrahmen 2, 3
die vorerwähnte Drehung der entsprechenden Hubmutter 8
verhindern kann. Die beiden Tragarme 9 nehmen eine Tragplatte 10 auf, die entweder fest, beispielsweise mittels
Schrauben mit den Tragarmen 9 verbunden ist oder beispielsweise bei entsprechender Ausbildung von Tragarmen 9 und/
oder Tragplatte 10 lose, aber sicher und damit unverrückbar auf den Tragarmen 9 aufliegt. Die Tragarme 9 mit der
Tragplatte 10 können auch einstückig ausgebildet sein.

Die Tragplatte 10 weist mehrere, beispielsweise drei erkennbare und in der Zeichnungsebene nebeneinander angeordnete Ausnehmungen 11 auf, wobei dahinter noch weitere drei Ausnehmungen 11 vorgesehen sein können. In jede dieser Ausnehmungen 11 ist ein Keimbehälter 12 lose und damit auswechselbar eingehängt bzw. eingesetzt, dessen Boden und Wände als Sieb ausgebildet sind. Die Sieböffnungen müssen dabei so klein sein, daß das in die Keimbehälter 12 nur in einer dünnen Schicht eingefüllte Keimgut nicht durch dieselben heraus- bzw. hindurchfallen kann. In Abhängigkeit vom Keimgut können die einzelnen Keimbehälter 12 auch unterschiedlich große Sieböffnungen besitzen. Jeder Keimbehälter 12 kann in zwei oder mehr Fächer unterteilt sein und/oder eine solche Höhe besitzen, daß er noch einen zusätzlichen Siebeinsatz ohne Beeinträchtigung des Keimvorganges aufnehmen kann.

Unterhalb der Tragplatte 10 und auch unterhalb der Keimbehälter 12 ist eine Schale 13 mit Wasser vorgesehen, die sich lose und damit auswechselbar auf der Bodenplatte 4 abstützt und deren Fläche so groß ausgebildet ist, daß sie alle Keimbehälter 12 aufnehmen kann. In Abänderung der gewählten Darstellung ist es möglich, jedem Keimbehälter 12 eine getrennte Schale 13 zuzuordnen, so daß die Schalen 13 in Abhängigkeit von der Keimzeit des in den einzelnen Keimbehältern 12 befindlichen Keimgutes ausgewechselt und das Wasser erneuert werden kann. Dabei ist auch ein Auswechseln der einzelnen Keimbehälter 12 und/oder Schalen 13 möglich, ohne daß die Funktion der Vorrichtung 1 beeinträchtigt wird.

Um das in den Keimbehältern 12 befindliche Keimgut mit dem für den Keimvorgang erforderlichen Wasser zu versorgen, werden der nicht dargestellte Elektromotor angeschaltet und damit die Spindeln 5 in der Richtung gedreht, daß eine Abwärtsbewegung aller Hubmuttern 8 erfolgt. Dabei bewegen sich die Tragarme 9 mit der Tragplatte 10 nach unten und die Keimbehälter 12 tauchen in das Wasser der Schale 13 ein. Die Eintauchtiefe ist so bemessen, daß das gesamte in einem Keimbehälter 12 befindliche Keimgut von dem durch die Sieblöcher einströmenden Wasser vollständig umschlossen wird. Nach einer vorgegebenen, durch das Keimgut bestimmbaren Zeit wird über ein an sich bekanntes, zeitlich einstellbares Steuergerät der Elektro-Antriebsmotor im entgegengesetzten Drehsinn angeschaltet, so daß sich die Keimbehälter 12 mit dem Keimgut wieder aus der Schale 13 herausbewegen. Über die Sieböffnungen kann das in die Keimbehälter 12 eingedrungene Wasser vollständig ablaufen und Luft und gegebenenfalls Licht an das Keimgut gelangen.

Nach einer weiteren, ebenfalls durch das Keimgut bestimmbaren Zeit wiederholt sich der zuvor beschriebene Tauchvorgang, wobei die Anschaltung des Elektro-Antriebsmotors grundsätzlich über das Steuergerät erfolgt, während dessen Abschaltung mittels besonderer Endschalter oder auch durch das Steuergerät bewirkt wird. Das Steuergerät stellt dabei auch das intervallmäßige Eintauchen sicher, so daß eine ständige, gleichmäßige Befeuchtung des Keimgutes gewährleistet ist.

Die Größe der einzelnen Keimbehälter 12 wird zweckmäßigerweise so bemessen, daß dieselben oder eines ihrer Fächer eine Mahlzeit an Keimgut für eine Person oder eine Familie aufnehmen können. Das bedeutet, daß eine Tragplatte 10 mit sechs Keimbehältern 12 beispielsweise die Nahrung für 2 Tage aufnehmen kann. Bei einem größeren Bedarf an Keimlingen bzw. bei längeren Keimzeiten kann eine zweite derartige Vorrichtung 1 verwendet werden. Dabei ist es möglich, die Stützrahmen 2, 3 der zweiten Vorrichtung 1 auf die Stützrahmen 2, 3 der ersten Vorrichtung 1 zu stellen und die Spindeln 5 der unteren Vorrichtung 1 über besondere Kupplungsstücke mit den Spindeln 5 der oberen Vorrichtung 1 zu verbinden, wodurch ein Antriebsmotor mit der entsprechenden Kette 7 und den Kettenrädern 6 eingespart wird. Ein getrenntes Absenken und Anheben der beiden Tragplatten 10 ist dann allerdings nicht möglich.

Die in der Fig. 2 dargestellte Vorrichtung 21 weist im Gegensatz zur Vorrichtung 1 nur einen Stützrahmen 22 auf, dem eine Bodenplatte 24 zugeordnet ist. Eine senkrechte, im Stützrahmen 22 drehbar gelagerte Spindel 25 trägt ein Zahnrad 26, das mit einem Ritzel eines nicht gezeichneten, im Stützrahmen 22 untergebrachten Antriebsmotors direkt oder über ein Getriebe zusammenwirkt. Die Spindel 25 nimmt eine Hubmutter 28 auf, die über einen Arm 29 an einer im Stützrahmen 22 befestigten Schiene 30 gegen Drehung gesichert und heb- und senkbar geführt ist. Dieser Arm 29 ragt gleichzeitig auch durch mindestens einen senkrechten Schlitz aus dem Stützrahmen 22 heraus und bildet hier gleichzeitig mindestens eine gabelförmige Aufnahme 31, die einen aus einem Siebblech gefertigten Keimbehälter 32 mit einem seitlichen Rand - von oben eingehängt oder seitlich eingeschoben - aufnehmen kann. Auf der Bodenplatte 24 stützen sich ein oder mehrere Wasserschalen 33 ab, die der Anzahl und der Größe der Keimbehälter 32 angepaßt sind. Die Arbeitsweise dieser Vorrichtung 21 stimmt mit derjenigen der Vorrichtung 1 überein.

In Abänderung der erläuterten Ausführungsbeispiele ist es möglich, die Tragplatte 10 bzw. den Arm 29 mit den Keimbehältern 12, 32 ortsfest anzuordnen und an der Schale 13 bzw. 33 den Hubantrieb vorzusehen. Ferner kann der Hubantrieb anders gestaltet sein. Schließlich ist es möglich, bei der hydroponischen Anpflanzung von Gräsern den Boden der Keimbehälter mit einer dünnen Schicht aus Watte, Papier oder dgl. zu bedecken, auf die dann der Samen gelegt wird.

0111721

157 EP

Bruno Meyer, Lindenstraße 2, 5238 Hachenburg

Patentansprüche

1. Vorrichtung zum Erzeugen von Keimlingen aus Keimgut, insbesondere aus Samen, Getreide und Hülsenfrüchten sowie zur hydroponischen Anpflanzung von Gräsern für die menschliche Ernährung, mit mindestens einem das Keimgut aufnehmenden Keimbehälter und einer mit Wasser befüllbaren Schale, in die der Keimbehälter über einen Hubantrieb eintauchbar ist,
dadurch gekennzeichnet,
daß der Keimbehälter (12, 32) als Sieb ausgebildet und auswechselbar in einer Ausnehmung (11, 31) einer Tragplatte (10, 29) eingehängt ist, daß die Tragplatte (10, 29) und die Schale (13, 33) an mindestens einen seitlichen Stützrahmen (2, 3, 22) angeschlossen sind und daß der Hubantrieb (5 - 8, 25 - 28) im Stützrahmen (2, 3, 22) angeordnet und zwischen der Tragplatte (10, 29) und der Schale (13, 33) wirksam ist.

2. Vorrichtung nach Anspruch 1,
dadurch gekennzeichnet,
daß die Schale (13, 33) ortsfest angeordnet und die Tragplatte (10, 29) heb- und senkbar ausgebildet ist.

3. Vorrichtung nach Anspruch 1,
dadurch gekennzeichnet,
daß die Tragplatte (10, 29) ortsfest angeordnet und die Schale (13, 33) heb- und senkbar ausgebildet ist.

4. Vorrichtung nach einem der Ansprüche 1 - 3,
dadurch gekennzeichnet,
daß sich die Tragplatte (10) auf mindestens einem
Tragarm (9) des Hubantriebes (5 - 8) abstützt.

5. Vorrichtung nach Anspruch 4,
dadurch gekennzeichnet,
daß die Tragplatte (10) mit dem Tragarm (9) einstückig
(29) ausgebildet ist.

6. Vorrichtung nach einem der Ansprüche 1 - 5,
dadurch gekennzeichnet,
daß der Hubantrieb (5 - 8, 25 - 28) aus mindestens einer
Spindel (5, 25) mit einer Hubmutter (8, 28) und einem
Antriebsmotor gebildet ist.

7. Vorrichtung nach einem der Ansprüche 1 - 6,
dadurch gekennzeichnet,
daß die Tragplatte (10) und die Schale (13) zwischen
zwei mit Abstand voneinander angeordneten Stützrahmen
(2, 3) vorgesehen sind.

8. Vorrichtung nach den Ansprüchen 6 und 7,
dadurch gekennzeichnet,
daß die Spindeln (5) eines oder zweier Stützrahmen
(2, 3) über eine Kette (7) mit einem gemeinsamen
Antriebsmotor verbunden sind.

9. Vorrichtung nach einem der Ansprüche 6 - 8,
dadurch gekennzeichnet,
daß mindestens zwei Stützrahmen (2, 3 bzw. 22) übereinander angeordnet und die Spindeln (5 bzw. 25) derselben über Kupplungsstücke miteinander verbunden sind.

0111721

10. Vorrichtung nach einem der Ansprüche 1 - 9,
    dadurch gekennzeichnet,
    daß die Schale (13, 33) auswechselbar an der Tragplatte (10, 29) angeordnet ist.

11. Vorrichtung nach einem der Ansprüche 1 - 10,
    dadurch gekennzeichnet,
    daß jedem Keimbehälter (12, 32) eine getrennte
    Schale (13, 33) zugeordnet ist.

12. Vorrichtung nach einem der Ansprüche 1 - 10,
    dadurch gekennzeichnet,
    daß dem Hubantrieb (5 - 8, 25 - 28) ein zeitlich
    einstellbares Steuergerät zugeordnet ist.

0111721

## Fig. 1

## Fig. 2

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 339 308  (D.T. CLARE)<br>* Spalte 2, Zeile 18 - Spalte 3, Zeile 18; Figuren 1-3 *<br><br>--- | 1,2,12 | A 01 C    1/02<br>A 01 G   31/02 |
| A | AT-B-  216 808  (O. RUTHNER)<br>* Seite  2,  Zeile 24 - Seite 3, Zeile 17; Figuren 1-3 *<br><br>--- | 1,2 | |
| D,A | DE-A-3 038 443  (RIDDER & ARENS oHG)<br>* Ansprüche 1, 3-5; Figur 1 *<br><br>--- | 1,9 | |
| D,A | BE-A-  566 856  (G. PERIN)<br>* Ganzes Dokument *<br><br>----- | 1 | |

|  | RECHERCHIERTE SACHGEBIETE (Int. Cl. ³) |
|---|---|
|  | A 01 C    1/02<br>A 01 G   31/00 |

Der vorliegende Recherchenbericht wurde für alle Patentansprüche erstellt.

| Recherchenort | Abschlußdatum der Recherche | Prüfer |
|---|---|---|
| BERLIN | 10-02-1984 | FEY G. |